# EUROPEAN PATENT APPLICATION

(11) **EP 3 808 781 A1**
(43) Date of publication of application: **21.04.2021**
(21) Application number: 19202966.8
(22) Date of filing: 14.10.2019
(51) Int. Cl.: C08B 3/16

(54) **CELLULOSE ACYLATES COMPRISING PLASTICIZERS COVALENTLY BONDED THERETO**

(71) Applicant: Cerdia International GmbH, 4052 Basel (CH); Université Jean Monnet Saint Etienne, 42023 Saint Etienne Cedex 2 (FR); Université Claude Bernard Lyon 1, 69622 Villeurbanne (FR); Institut National des Sciences Appliquées de Lyon, 69621 Villeurbanne Cedex (FR); CENTRE NATIONAL DE LA RECHERCHE SCIENTIFIQUE, 75794 Paris Cedex 16 (FR)
(72) Inventor: CHALAMET, Yvan, 43120 Monistrol sur Loire (FR); DECROIX, Camille, 43210 Bas en Basset (FR); ARGOUD, Alexandra, 38110 La Chapelle de la Tour (FR); VERGELATI, Caroll, 38118 Saint Baudille de la Tour (FR); CHAUBET, Olivier, 69003 Lyon (FR)
(74) Representative: Trinks, Ole

(57) **Abstract**

The invention concerns processes for the production cellulose acylates of the type cellulose(Ac¹, Ac²), wherein the acylate Ac¹ is derived from a C2 to C4 fatty acid and the acylate Ac² is a plasticizing acylate, which is covalent attached to the cellulose. In the inventive process, the attachment of the acylate Ac² is accomplished by thermal processing a precursor cellulose(Ac¹) in the presence of an acylation agent Ac²X and the absence of a solvent. Since such processes do not require solvent, they significantly increase the economic feasibility of such cellulose acylates, and avoid problems associated with externally plasticized cellulose acylates, such as plasticizer migration. The invention further concerns cellulose acylates of the type cellulose(Ac¹, Ac²), which are prepared using this process, corresponding cellulose acylates having a low Tg, as well as devices adapted to prepare such cellulose acylates.

## Description

The invention concerns processes for the production cellulose acylates of the type cellulose(Ac¹, Ac²), wherein the acylate Ac¹ is derived from a C2 to C4 fatty acid and the acylate Ac² is a plasticizing acylate, which is covalently attached to the cellulose. In the inventive process, the attachment of the acylate Ac² is accomplished by thermal processing of a precursor cellulose(Ac¹) in the presence of an acylation agent Ac²X and the absence of a solvent. The invention further concerns cellulose acylates of the type cellulose(Ac¹, Ac²), which are prepared using this process, corresponding cellulose acylates having a low Tg, as well as devices adapted to prepare such cellulose acylates.

### State of the art

In recent years, due to growing environmental concerns, the efforts to replace petroleum-based commodity plastics by biosourced materials has significantly increased in the industry.

An interesting plastic, which is derived from cellulose as a renewable material, is cellulose diacetate (CDA), which has been produced and available at industrial scale for almost 100 years. Up to now, however, cellulose acetate has mainly been used as fibers in the manufacture of cigarette filters and textile applications.

CDA is characterized by a degree of substitution (DS) between 2.2-2.7, i.e. an average of 2.2-2.7 acetate groups per one anhydroglucose unit (AGU). Cellulose acetate in this DS range is soluble in acetone, where from it can be processed into filaments by e.g. wet spinning processes.

A disadvantage of cellulose diacetate is on the other hand, that, due to its particular cohesive structure, it is not easily melt-processable and cannot be shaped by conventional extrusion or injection processes. This is due to the presence of strong intermolecular and intramolecular hydrogen bonds of the residual hydroxyl functions in CDA, which provide for a comparatively high glass temperature (Tg) relative to other conventional thermoplastics. In addition, the melting temperature of CDA is relatively high with about 240°C, and close to the decomposition temperature, so that the processing window of CDA is quite narrow.

A conventional means to facilitate the processing of cellulose acetate is the addition of plasticizers, which lower the Tg of the material. Such plasticizers are regularly low molecular weight compounds such as phthalates and triacetin, which provide the resulting "plasticized cellulose acetate" with properties such as transparency, shine and silky feel.

However, due to concerns about the possible migration of external plasticizers out of the cellulose acetate polymer matrix over time, the area of application of this CDA still remain considerably limited today.

In the recent past, some effort has been made to alleviate the problem of plasticizer migration by covalently attaching plasticizers to the cellulose acetate. E.g. Manon Boulven in Carbohydrate Polymers 206, 2019, pp. 674-684 describe the modification of CDA via the reaction with acyl chlorides in the presence of a base in dioxane solution.

An important point to consider when broadening the range of possible applications for cellulose acetate is costs, as for such applications cellulose acetate will be in competition with conventional crude oil derived plastics. A major obstacle in this regard is that up to now, when plasticizer modified cellulose acetate was prepared, the material was regularly prepared in a solvent process, possibly in the further presence of an organic base. Evidently, this significantly increases costs, as the solvent has to be provided and solvent and base have to be removed from the final product by e.g. stripping the application of low pressure. If the final application is e.g. in food or cosmetic packaging extra effort is necessary to ensure that solvents and by products are effectively removed to ensure that the products will meet the high purity standards for such applications.

Methods, which avoid solvents have e.g. been described in Hu H. et al RSC Adv, vol. 5, Feb. 2015, who proposed to esterify cellulose with a mixture of fatty acid and sulphuric acid catalyzed anhydride (H₂SO₄). In this process, the premix of acids and anhydrides is stirred 60min at 80°C before adding cellulose; the mixture is then reacted in a ball mill. Similarly, Vaca-Garcia describes a process wherein a mixture of fatty acid, acetic anhydride and H₂SO₄ is reacted with cellulose to provide. In the products investigated the total DS was however not more than about 2.1 and the maximum DS with regard to acetyl was about 1.5.

Biswas et al., Biomacromolecules, 6(4), pp. 1843-1845, describe a process to acylate cellulose in the presence of iodine as a catalyst. Unfortunately, this process has the downside that the catalyst causes strong degradation of the polymer chain.

A further point to consider is that the modified cellulose acetate should have physical properties in terms of e.g. impact resistance, elongation and stress at break, or maximum stress, which makes the material competitive to conventional plastics.

Based on these considerations, there is a need for production processes, which can be conducted in the substantial absence of organic solvent and which effectively produce cellulose acetate or comparable derivatives of cellulose which have plasticizing moieties attached thereto. The present application addresses these needs.

### Detailed description of the invention

Accordingly, a first aspect of the invention is concerned with a process for the production of an acylated cellulose of the type cellulose(Ac¹, Ac²) having at least two different acyl substituents Ac¹ and Ac², comprising
- subjecting a mixture of (i) a cellulose partial acylate of the type cellulose(Ac¹) having a degree of substitution (DS) of between 2.0 and 2.9, wherein Ac¹ is an acyl of a C2 to C4 fatty acid or mixture thereof, and (ii) an acylation agent Ac²X to processing at a temperature in excess of 100°C in the absence of a solvent to provide an acylated cellulose(Ac¹, Ac²) having a lower Tg than the cellulose(Ac¹), wherein Ac² has at least four chain forming atoms in addition to CO, and
- optionally drying the acylated cellulose acetate thus obtained.

In the above process, the drying is used primarily to remove byproducts of the acylation of Ac²X and the cellulose(Ac¹), e.g. if X is OH, the reaction of OH-groups in the cellulose with Ac²OH provide H₂O as a by-product, which can be removed with drying.

X in the above Ac²X is OH, a halogen, O-C₁₋₆-alkyl, OAc² or an OAc, wherein Ac is other than Ac². Also, it is possible to use mixtures of the above indicated possibilities of X. Preferably X in the above Ac²X is OH, a halogen or an OAc wherein Ac is other than Ac², more preferably X is OH. In this case, Ac²OH is a carboxylic acid.

As indicated above, Ac² has at least four chain forming atoms in addition to CO. In this regard, chain forming atoms are atoms, which can form covalent bonds with at least two other atoms, such as oxygen, nitrogen and carbon. Hydrogen does not have this capability and thus is not a chain forming atom according to this invention. The chain forming atoms can form a chain, in which all atoms are aligned, or can form a branched chain. As an example, Ac² can be valeryl or a higher fatty acid acyl residue. In another example Ac² is an alkoxylated carboxylic acid (-CO-CH₂-CH₂-O-CH₃; underlined atoms counted as chain forming atoms).

Concerning the difference in the Tg between the the acylated cellulose(Ac¹, Ac²) and the acylated cellulose(Ac¹), it is preferred that the Tg of the acylated cellulose(Ac¹, Ac²) is lower by at least 10°C, preferably at least 25°C, more preferably at least 35°C and even more preferably at least 45°C than the corresponding acylated cellulose(Ac¹) starting material.

Whereas this is believed to be clear from the above, the acylated cellulose(Ac¹) having a DS in the range of 2.0 to 2.9 has further residual OH-groups, which can be reacted with Ac²X. In addition, for clarity, it is noted that also the acylated cellulose(Ac¹, Ac²) may have and preferably has residual OH groups, i.e. the OHs in the acylated cellulose(Ac¹, Ac²) is either capped with Ac¹ or Ac² or present in unmodified form.

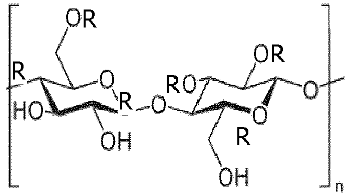

R is either OH, Ac¹ or Ac².

In a highly preferred embodiment, Ac¹ in the cellulose(Ac¹) is acetyl (CH₃CO). in another preferred embodiment, Ac¹ comprises a mixture of acyls of a C2 to C4 fatty acid, such as cellulose acetate/propinonate and mixed cellulose acetate/n-butyrate. Most preferably, cellulose(Ac¹) is cellulose acetate.

As indicated above, the cellulose partial acylate of the type cellulose(Ac¹) has a degree of substitution (DS) of between 2.0 and 2.9. In a preferred embodiment, the degree of substitution (DS) is in the range of from 2.2 and 2.7 and in particular 2.35 to 2.6.

Concerning acylation agent Ac²X the invention is not subject to relevant restrictions, except that as indicated above Ac² contains at least four chain forming atoms in addition to CO. The presence of acyl groups of this type is believed to prevent the formation of a distinct crystalline structure of the acylated cellulose(Ac¹, Ac²), so that the Tg is lowered and the processability is improved. Preferably, the chain length of Ac¹ is shorter by at least three atoms, more preferably at least four atoms, even more preferably at least five atoms, and even more preferably at least six atoms than the chain length of Ac². In this regard, it has been observed that with a larger the difference between chain length of Ac¹ and Ac², the impact on the reduction of the Tg is more pronounced.

A particularly suitable Ac²X in the context of the invention is a carboxylic acid, preferably an aliphatic carboxylic acid, more preferably an aliphatic C5 to C16 carboxylic acid and even more preferably an aliphatic C7 to C10 carboxylic acid, or respective anhydride thereof. The C7 to C10 carboxylic acids have the advantage over e.g. hexanoic acid, that they have higher boiling points and a less unpleasant smell, which might be perceptible in products comprising hexanoic esters in case of partial ester-hydrolysis under environmental conditions. In addition, e.g. octanoic acid is available from renewable sources such as coconut oil, which helps to further reduce the environmental footprint of the acylated cellulose(Ac¹, Ac²) product.

An anhydride may be a symmetric anhydride ((Ac²)₂O) or a mixed anhydride of the type Ac²-OAc, wherein Ac is a less costly acyl such as acetate. With regard to these carboxylic acids, it is noted that if the chain length is more that C16, it is difficult to ensure sufficient solubility of the acid in the admixture with cellulose(Ac¹), which provides difficulties in the reaction of the two in the absence of solvent.

Highly preferred Ac²X of this type include n-hexanoic acid, n-heptanoic acid, n-octanoic acid, n-decanoic acid and n-dodecanoic acid, as well as their symmetric and unsymetric anhydrides with e.g. acetic acid. Most preferably, Ac²X is octanoic acid. The reaction, by which the such acids are attached to the cellulose(Ac¹) is a condensation.

The amount of modification of the cellulose partial acylate cellulose(Ac¹) is conventionally adjusted such, that the desired reduction of Tg is achieved, while providing adequate physical properties of the product. In this regard, a DS with regard to Ac² (=DS(Ac²)) in the cellulose in the range of 0.05 to 1 has provided a balanced profile of properties. Consequently, the amount of the acylation agent AC²X in the mixture of (i) and (ii) in the above process is preferably adjusted to provide an acylation DS(Ac²) of 0.05 to 1, preferably 0.07 to 0.5 and more preferably 0.1 to 0.3. The skilled practitioner will be aware in this regard, that a higher amount of Ac²X than necessary to provide such DS with a theoretical complete reaction may often be used to reduce the reaction time, albeit at the cost of more Ac²X being required and more effort being necessary to remove excess Ac²X from the product.

Concerning the total DS (i.e. the sum of DS(Ac¹) and DS(Ac²)), it is preferred that this is in the range of 2.1 to 3.0, preferably 2.3 to 3.0 and even more preferably 2.5 to 3.0. If the upper limit of the total DS is less than 3.0, it can be e.g. 2.9, 2.8 or 2.75.

The processing at a temperature in excess of 100°C is preferably conducted under conditions of shear and more preferably is extrusion processing. Extrusion is a kind of processing, wherein an intimate mixture of the reactants can be ensured (to provide a uniform product) and where it is conveniently possible to subject a mixture to various temperature profiles.

As indicated above, the processing of the mixture of (i) and (ii) is at a temperature in excess of 100°C. Preferably, the processing is at a temperature in excess of 130°C, more preferably at a temperature in excess of 150°C and even more preferably at a temperature in excess of 160°C. Concerning the upper limit of the temperature, this should regularly be adjusted such, that degradation of the reactants and products is avoided, which can usually be ensured if the processing is at or below a temperature of 250°C, more preferably at or below a temperature of 220°C and even more preferably at or below a temperature of 200°C.

The time, during which the mixture is subjected to a temperature of at least 100°C is not subject to any relevant restrictions, except that the time should be sufficiently long to ensure the progressing of the reaction to the desired DS and should not be so long that there is substantive degradation of reactants or products. Evidently, to ensure sufficient progress of the reaction at higher temperatures less time is required, whereas at lower temperatures the reaction requires more time to progress.

If the mixture is processed by extrusion, the processing time is somewhat limited by the flow of the mixture through the extruder. However, still it is possible to provide a longer reaction also with extrusion by subjecting the reaction mixture to two or several passes through the same or different extruders. Thus, in a preferred embodiment of the inventive process, the processing in step (i) is by extrusion and involves passing the mixture through an extruder for two or more passes. In another preferred embodiment, the processing in step (i) is by extrusion and involves passing the mixture through an extruder for one pass only.

In the investigations underlying this invention, it has been observed that the reaction effectivity can be increased if a mineral acid is added to the reaction mixture. Thus, in a preferred embodiment of the inventive process the processing at a temperature in excess of 100°C in the absence of a solvent is in the presence of a mineral acid. Suitable mineral acids include sulfuric acid, phosphoric acid and hydrogen halides. Preferred mineral acids are hydrogen halides, as most hydrogen halides can effectively be removed under vacuum, which simplifies purification of the product. A highly preferred mineral acid is hydrogen chloride.

Alternatively, organic acids such as trifluoracetic acid or methanesulfonic acid could be used as catalysts.

If mineral acids are used as reaction promoters or catalysts, the amount of such acids is suitably from 0.005 to 0.05 and preferably 0.008 to 0.03 equivalents of mineral acid, relative to the acylation agent Ac²X.

If a mineral acid is used as a catalyst in an extrusion, it is possible to subject only the partial cellulose(Ac¹) in admixture with the acylation agent Ac²X to thermal processing (e.g. at a temperature of about 160°C) in a first step and to add the mineral acid catalyst prior to or in a second step of thermal processing. However, since it was observed that such pre-processing does not provide significant benefits over a one step processing where the mixture of partial cellulose(Ac¹), acylation agent Ac²X and mineral acid is directly processed, such pre-processing is not required.

In a further aspect, the present application concerns an acylated cellulose of the type cellulose(Ac¹, Ac²), which is obtainable by the process as described above.

In a yet further aspect, the present application concerns an acylated cellulose of the type cellulose(Ac¹, Ac²) having a Tg of equal to or less than 155°C, wherein Ac¹ is as defined above and the acyl group Ac² is derived from an aliphatic C5 to C16 carboxylic acid. For this cellulose(Ac¹, Ac²), it is preferred that the Tg is even less than 153°C, more preferably less than 145°C and even more preferably less than 140°C. On the other hand, to ensure adequate physical characteristics, the Tg should preferably be equal to or in excess of 80°C and more preferably equal to or in excess of 100°C. The Tg is conventionally determined by DSC as described below.

These acylated celluloses have the advantage compared to corresponding physical mixtures of cellulose acylates of the type cellulose(Ac¹) and plasticizers, which have not been covalently attached to the cellulose, as well as the cellulose(Ac¹) without plasticizer, that they provide a higher stiffness (as determined via the Youngs modulus), and improved tensile resistance (as determined via the maximum stress or stress at break).

Such acylated cellulose acetates preferably in addition have a degradation temperature Td5% (= temperature of 5% weight loss of on the thermo-gravimetric analysis) of at least 300°C and/or an enthalpy of melting of ≤ 5 Jg⁻¹, preferably ≤ 3 Jg⁻¹ and more preferably ≤ 1 Jg⁻¹.

Corresponding acylated cellulose acetates with these specifications will regularly have a total DS in the range of 2.25 to 2.9 (= cumulative DS for Ac¹ and Ac²), a DS for Ac¹ in the range of 2.2 to 2.7 and a DS for Ac² in the range of 0.05 to 0.3.

Alternatively, or cumulatively thereto, the above acylated cellulose acetate has a residual organic solvent content of not more than 50 ppm, as determined by EN 13628-1 and EN 13638-2. Organic solvent for this purpose is solvent, which does not naturally occur in foods, i.e. ethanol or acetic acid are not regarded as organic solvents for the purpose of EN 13628-1 and EN 13638-2.

The above described cellulose acetate materials are particularly useful for applications, for which there are strict requirements on organic solvent contaminants such as foods and cosmetics. Thus, in another aspect, the present invention is concerned with the use of such acylated cellulose materials for the packaging of foods or cosmetics. For example, the acylated cellulose materials could be used as a film to be warped around the foodstuff, or as a container, into which a cosmetic can be filled. In such use, the acylated cellulose materials can be formulated without further additives, but could also be formulated with further additives including plasticizers for optimizations of their properties to the intended purpose.

In a yet further aspect, the present application concerns an extruder, which is at least partially filed with a mixture of a cellulose partial acylate of the type cellulose(Ac¹) having a degree of substitution DS of between 2.0 and 2.9, wherein Ac¹ is an acyl of a C2 to C4 fatty acid or mixture thereof and an acylation agent Ac²X, wherein X is as defined above and Ac² has at least four chain forming atoms in addition to CO.

In a preferred embodiment of this aspect, the extruder is a twin screw extruder.

In a yet further aspect, the present application concerns the use of an extruder for the processing of a mixture of cellulose partial acylate of the type cellulose(Ac¹) having a degree of substitution DS of between 2.0 and 2.9, wherein Ac¹ is an acyl of a C2 to C4 fatty acid or mixture thereof and an acylation agent Ac²X as defined above in the absence of a solvent, wherein the mixture is processed in the extruder at a temperature in excess of 100°C and whereby an acylated cellulose of the type cellulose(Ac¹, Ac²) having at least two different acyl substituents Ac¹ and Ac² is produced. This acylated cellulose has a lower Tg than the acylated cellulose(Ac¹) starting material.

With regard to the above, it should be noted that any preferred embodiments described for one of the aspects is meant to also apply to all other aspects, so that the combinations of these embodiments with these aspects are also encompassed by this disclosure even if the combination is not explicitly described.

In the following, the invention will be further described by means of examples, which should however not be construed as in any way limitative to the invention.

### Examples:

The following methods were used for the analysis of the prepared samples and are also to be used for the determination of characteristics specified in the claims or specification of this invention. "CA" in the following designates the respective cellulose acetate.

### Determination of the DS:

The DS of the respective products (with regard to their Ac² contents) was determined by ¹H NMR spectroscopy. The analysis was realized at a 298K. Deuterated chloroform or dimethyl sulfoxide were used as solvents depending on the solubility of CA samples. For 1 ml of solvent, between 50 and 100 mg of samples were added and left under stirring for 24 hours before the analysis.

### Differential scanning calorimetry (DSC)

The temperature and the enthalpy of melting of the samples were determined by differential scanning calorimetry (TA Instrument Q10). The mass of the samples analysed was around 5 to 10 mg and was sealed in previously drilled aluminium capsules. A heating rate of 30°C.min⁻¹ was applied from 50 to 250°C.

It was impossible to suppress the thermal history by recording the data on the second heat due to thermal degradation around 240°C of samples. All the samples were obtained by solubilization/precipitation, so the hypothesis was made that they all had the same thermal history. An average was done with at least three measurements.

### Thermogravimetric analysis (TGA)

TGA measurement were performed on the Mettler Toledo thermogravimetric / differential calorimeter TGA / DSC 1 at atmospheric pressure. The analysis was realised up to 550°C at a heating rate of 10°C.min⁻¹, under nitrogen flow (50mL.min⁻¹). The thermal decomposition temperatures recorded are Td5% which corresponds to a weight loss of 5% on the thermo-gravimetric analysis and also Tdmax which corresponds to the maximum of the derivative curve.

### Dynamical mechanical analysis CDMA)

The dynamical mechanical analysis was carried out by means of a dynamical mechanical thermal analyser Q800 (TA instruments) on rectangular samples cut out in the film made by solvent casting method. A constant heating rate of 2°C min⁻¹ and frequencies of 1Hz were used. A temperature range of -100°C to + 200 °C was been studied. Transition temperatures were determined using the inflexion point of the storage modulus curve and the glassy zone modulus was determined using the minimum of tangent δ according to C. Liu et al. Polymer (2006), pp. 4461-79. Modified CA samples were preconditioned at 30% of relative humidity for 60h before thermo-mechanical analysis, whereas pure CA was dried for 48 hours at 130°C to eliminate as much as possible traces of water.

### Mechanical analysis

Films of cellulose ester were made by dissolution of 2g of CA (or CA+ external plasticizer) in 20mL of acetone. The solutions were placed under stirring during 24h and then, poured into an evaporation bell, composed of a PTFE mold closed with a glass upper drilled on the top, at room temperature during 150h.

Uniaxial tensile testing measurements were performed at room temperature using a Shimatzu autograph AGS-X, at a crosshead speed of 5 mm.min⁻¹ with distance of 50 mm between grips. Rectangular specimen (width = 5 mm, thickness = 0.1 to 0.3 mm) were cut out in the film made by solvent casting method and were previously conditioned for 60 h under relative humidity of 30 %.

For each mechanical analysis, 10 samples were tested. The values presented are an average of these 10 tests. Samples were analysed with an average temperature fluctuation of 19 ± 2°C. The analyses are carried out under the same temperature conditions.

### Size exclusion chromatography (SEC)

SEC of cellulose acetate and cellulose acetate esterified samples was carried out on a chromatograph with an auto sampler waters 717 connect to a refractometer RI Waters 2414, a viscometer Wyatt ViscoStar and a light scattering detector miniDawnTreos. A pre-column and three columns (Shodex KF 801, KF 802 et KF 804) as the eluent. The solute concentration was 0.5% wt in THF. To carry out the measurements, the solution was filtered through 0.45 µm pore size PTFE filter and 100 µL are injected at 1 mL.min⁻¹.

### Example 1:

A set of cellulose acetate/octanoate products was prepared under conditions as shown below:
Sample 1: cellulose acetate DS 2.45 (reference)
Sample 2: cellulose acetate DS 2.45/octanoic acid, extrusion at 170°C
Sample 3: cellulose acetate DS 2.45/octanoic acid, extrusion at 170°C, 2 passes
Sample 4: cellulose acetate DS 2.45/octanoic acid, extrusion at 200°C, 2 passes
Sample 5: cellulose acetate DS 2.45/octanoic acid, extrusion at 170°C, 0.01 eq. HCI
Sample 6: cellulose acetate DS 2.45/octanoic acid, extrusion at 170°C, 0.02 eq. HCI

The modified cellulose acetate samples were prepared by the following method:
In all preparations, the octanoic acid concentration was kept at 35wt% of the composition, with corresponds to 1eq/cellulose acetate. The reactive melt processing was realized using a corotative twin-screw extruder at 100 rpm, wherein the extruder barrel was composed of 10 independently heated zones and had a L/D ratio of 36. Cellulose acetate powder was pre-dried for 72 hours at 70°C before extrusion and inserted in zone 1. Octanoic acid was injected in zone 2. The total feeding rate was around 2kg.h⁻¹.

In order to observe the effect of residence time on the reaction, samples 3 and 4 underwent 2 extrusion cycles. In this case, the pellets from the first cycle were directly reinserted into the extruder at zone 1.

The pellets obtained from the extrusion were dissolved in acetone and then poured in ethanol for 30min under energetic stirring to isolate the cellulose acetate/octanoate. The precipitated material was filtered by Büchner filtration. The resulting cellulose acetate/octanoate samples were dried at 60°C under vacuum to obtain the final sample.

The thus obtained samples were analyzed for their physical characteristics and the results of these analyses are provided in the below table 1:

| | Tg* [°C] | DS_{octanoyl} | Tm [°C] | Td5% [°C] | Tdmax [°C] |
|---|---|---|---|---|---|
| Sample 1 | 193 | 0 | 243 | 334 | 365 |
| Sample 2 | 179 | 0.02 | 240 | 336 | 366 |
| Sample 3 | 179 | 0.02 | 241 | 337 | 368 |
| Sample 4 | 157 | 0.09 | 231 | 334 | 367 |
| Sample 5 | 156 | 0.13 | 225 | 319 | 362 |
| Sample 6 | 150 | 0.21 | 215 | 334 | 362 |

| | | | | | |
|---|---|---|---|---|---|
| * Determined by DSC | | | | | |

As becomes apparent from the above table, octanoate residues can effectively be grafted onto cellulose acetate with thermal processing at temperatures between 170°C and 200°C. In the presence of an acid catalyst, the reaction efficiency is significantly improved. In addition, while the Td5% is not significantly affected by the attachment of octanoic acid residues, the glass transition temperature of the material can be suppressed by more than 40°C.

In the size exclusion experiments, it was observed that at higher extrusion temperatures (sample 4) the molar mass was more strongly reduced than at lower extrusion temperatures (sample 3), which indicates degradation. Similar to sample 3, no significant effect on the molecular weight was seen the samples treated with HCI as a catalyst.

### Example 2:

A set of cellulose acetate/octanoate products, wherein the DS with regard to octanoate was systematically varied, was compared with regard to the Tg (as determined by DMA), Tm and enthalpy of melting. The respective samples with DS_{octanoyl} 0.02 to 0.21 were prepared as described in the above Example 1 by varying the acid concentration in the admixture. The sample with DS_{octanoyl} 0.27 was prepared by wet chemistry using octanoic anhydride and dioxane as a solvent. The results of this comparison are provided in the below table 2:

**Table 2:**

| DS_{octanoyl} | Tg [°C] | Tm [°C] | ΔH [J/g] |
|---|---|---|---|
| 0 | 193 | 243 | 20,2 |
| 0.02 | 181 | 240 | 10,8 |
| 0.09 | 152.2 | 232 | 5 |
| 0.13 | 135.6 | 225 | 4.1 |
| 0.21 | 133 | 215 | 2.3 |
| 0.27 | 129.3 | n.d. | 0 |

| | | | |
|---|---|---|---|
| n.d. = not determined | | | |

As is apparent from the above table, the Tg is reduced with increasing DS of octanoate to as little as about 130°C at a DS of about 0.27. At the same time, the melting enthalpy is reduced to 0 J/g. Even at a DS of 0.02 the melting enthalpy is reduced by half of the value of the non-modified cellulose acetate, indicating that even a little modification has a large impact on the melting behavior.

### Example 3:

In this example, the physical properties of unmodified cellulose acetate (DS_{Ac} = 2.45), and cellulose acetate (DS_{Ac} = 2.45), which was either externally or internally plasticized with octanoic acid, was compared. "Externally" here means that the cellulose acetate and octanoic acid were a physical mixture, whereas in the internally plasticized cellulose acetate the octanoic acid was covalently attached to the cellulose acetate. The amount of octanoic acid (OA) in the physical mixture (10.3%) was adjusted to be the same in weight as in the internally plasticized sample (DS_{octanoyl} = 0.21). The results of the comparison are provided in the below table 3.

**Table 3:**

| | Young modulus [MPa] | Elongation at break [%] | Maximum stress [MPa] | Stress at break [MPa] |
|---|---|---|---|---|
| CA (unmodified) | 2160 | 10.5 | 44.3 | 40 |
| CA(DS_{octanoyl} = 0.21) | 2240 | 17 | 51 | 48.3 |
| CA/10.3 % OA | 1960 | 20.2 | 42.7 | 42 |

As is apparent from the above, the internally plasticized CA shows improved characteristics with regard to the Young modulus (stiffness), maximum stress and stress at break over the unmodified CA and the externally plasticized CA. The elongation at break is only slightly less than that of the externally plasticized CA, but this is overcompensated by the significantly better other properties.

## Claims

1. Process for the production of an acylated cellulose of the type cellulose(Ac¹, Ac²) having at least two different acyl substituents Ac¹ and Ac², comprising
- subjecting a mixture of (i) a cellulose partial acylate of the type cellulose(Ac¹) having a degree of substitution (DS) of between 2.0 and 2.9, wherein Ac¹ is an acyl of a C2 to C4 fatty acid or mixture thereof, and (ii) an acylation agent Ac²X to processing at a temperature in excess of 100°C in the absence of a solvent to provide an acylated cellulose(Ac¹, Ac²) having a lower Tg than the acylated cellulose(Ac¹), wherein Ac² has at least four chain forming atoms in addition to CO, and
- optionally drying the acylated cellulose acetate thus obtained,
wherein X is OH, a halogen, O-C₁₋₆-alkyl, OAc² or an OAc, wherein Ac is other than Ac².

2. Process according to claim 1,
where the cellulose(Ac¹) has a degree of substitution (DS) of between 2.2 and 2.7 and preferably 2.35 to 2.6.

3. Process according to claim 1 or 2,
wherein the acylation agent Ac²X is a carboxylic acid, preferably an aliphatic carboxylic acid, more preferably an aliphatic C5 to C16 carboxylic acid and even more preferably an aliphatic C7 to C10 carboxylic acid, or respective anhydride thereof.

4. Process according to any one of the preceding claims,
wherein the processing at a temperature in excess of 100°C in the absence of a solvent is processing under conditions of shear and preferably extrusion processing.

5. Process according to any one of the preceding claims,
wherein the amount of the acylation agent Ac² in the mixture is adjusted to provide an acylation DS(Ac²) of 0.05 to 1 and preferably 0.1 to 0.3.

6. Process according to any one of the preceding claims,
wherein the processing is at a temperature of from 130°C to 220°C and preferably form 150°C to 200°C.

7. Process according to any one of the preceding claims,
wherein the processing is in the presence of a mineral acid, preferably a hydrogen halide and most preferably hydrogen chloride.

8. Process according to claim 8,
wherein processing is in the presence of 0.005 to 0.05 and preferably 0.008 to 0.03 equivalents of mineral acid, relative to the acylation agent Ax²X.

9. Acylated cellulose of the type cellulose(Ac¹, Ac²) obtainable by the process of any one of claims 1 to 8.

10. Acylated cellulose of the type Cellulose(Ac¹, Ac²) having a Tg of equal to or less than 155°C and preferably equal to or less than 153°C, wherein Ac¹ is as defined in claim 1 and the acyl group Ac² is derived from an aliphatic C5 to C16 carboxylic acid.

11. Acylated cellulose according to claim 10 having a degradation temperature Td5% of at least 300°C and/or an enthalpy of melting of ≤ 5 Jg⁻¹, preferably ≤ 3 Jg⁻¹ and more preferably ≤ 1 Jg⁻¹.

12. Acylated cellulose according to claim 10 or 11 having a residual organic solvent content of not more than 50 ppm, as determined by EN 13628-1 and EN 13638-2.

13. Use of acylated cellulose as defined in any one of claims 9 to 12 for the packaging of foods or cosmetics.

14. Extruder, which is at least partially filed with a mixture of a cellulose which is partially acylated with a C2 to C4 fatty acid or mixture thereof and has a degree of substitution (DS) of between 2.0 and 2.9 and an acylation agent Ac²X, wherein X is as defined in claim 1 and Ac² has at least four chain forming atoms in addition to CO.

15. Use of an extruder for the processing of a mixture of cellulose partial acylate of the type cellulose(Ac¹) having a degree of substitution DS of between 2.0 and 2.9, wherein Ac¹ is an acyl of a C2 to C4 fatty acid or mixture thereof and an acylation agent Ac²X as defined in claim 1 in the absence of a solvent, wherein the mixture is processed in the extruder at a temperature in excess of 100°C and whereby an acylated cellulose of the type cellulose(Ac¹, Ac²) having at least two different acyl substituents Ac¹ and Ac² is produced.
